(19) Europäisches Patentamt
European Patent Office
Office européen des brevets

(11) Veröffentlichungsnummer: **0 110 825**
**B1**

(12) # EUROPÄISCHE PATENTSCHRIFT

(45) Veröffentlichungstag der Patentschrift: **08.04.87**

(51) Int. Cl.⁴: **C 09 B 55/00** // C09B45/16, D06P3/06

(21) Anmeldenummer: **83810516.1**

(22) Anmeldetag: **10.11.83**

(54) **Unsymmetrische 1:2-Chromkomplexfarbstoffe, enthaltend eine Azo- und eine Azomethinverbindung.**

(30) Priorität: **16.11.82 CH 6667/82**

(43) Veröffentlichungstag der Anmeldung: **13.06.84 Patentblatt 84/24**

(45) Bekanntmachung des Hinweises auf die Patenterteilung: **08.04.87 Patentblatt 87/15**

(84) Benannte Vertragsstaaten: **CH DE FR GB IT LI**

(56) Entgegenhaltungen: **EP-A-0 066 230 FR-A-2 174 926 US-A-2 985 646**

(73) Patentinhaber: **CIBA-GEIGY AG, Klybeckstrasse 141, CH-4002 Basel (CH)**

(72) Erfinder: **Beffa, Fabio, Dr., Burgstrasse 38, CH-4125 Riehen (CH)**

EP 0 110 825 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Es sind bereits z.B. aus der FR-A-2,174,926 1:2-Chromkomplexfarbstoffe enthaltend eine Azo- und eine Azomethinverbindung, bekannt, jedoch vermögen diese nicht alle Wünsche bezüglich der Echtheiten voll zu erfüllen.

Gegenstand der vorliegenden Erfindung sind 1:2-Chromkomplexfarbstoffe der Formel 1

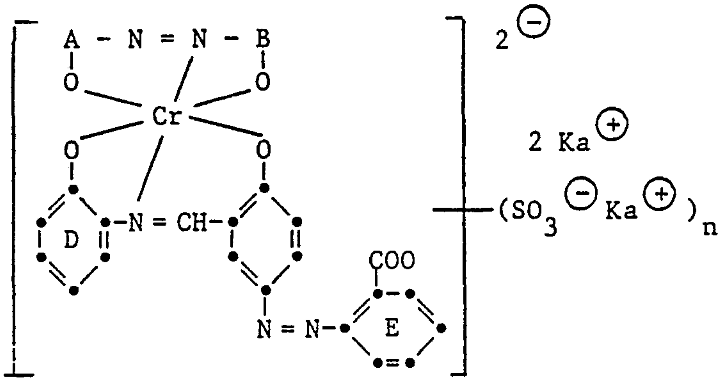

(I) ,

worin

A den Rest einer Diazokomponente der Benzol- oder Naphthalinreihe, welche die Hydroxygruppe in o-Stellung zur Azogruppe trägt,

B den Rest einer Kupplungskomponente, welche die Hydroxygruppe in Nachbarstellung zur Azogruppe trägt,

n 1 oder 2 und

Ka$^{\ominus}$ ein Kation bedeutet,

und worin die Ringe D und E weitere Substituenten tragen können, der Ring E jedoch keine Nitrogruppe, und wobei A nicht den Rest von 1-Amino-2-hydroxynaphthalin-4-sulfonsäure bedeuten darf, wenn B der Rest von 2-Naphthol ist, der Ring D nur in p-Stellung zum Sauerstoff durch Nitro substituiert und E nicht weitersubstituiert ist.

In den erfindungsgemässen Chromkomplexfarbstoffen der obigen Formel 1 kann die Diazokomponente noch einen oder mehrere weitere Substituenten tragen, z.B. niedermolekulares Alkyl oder Alkoxy, Halogen wie z.B. Chlor oder Brom, Nitro, Cyano, Sulfo, Alkylsulfonyl, wie z.B. Methylsulfonyl, Sulfamide, wie z.B. Sulfamid oder N-Methylsulfamid, oder Acylamino. Unter niedermolekularen Alkyl- oder Alkoxygruppen sind in dieser Anmeldung generell solche mit 1 bis 6, vorzugsweise 1 bis 2 C-Atomen zu verstehen und mit "Acylamino" werden niedrigmolekulare Alkanoylamino-, Alkylsulfonylamino- und Alkoxycarbonylaminoreste sowie Aroylamino- und Arylsulfonylaminoreste bezeichnet.

Der Rest A leitet sich beispielsweise von folgenden Aminen ab: 2-Amino-1-hydroxybenzol, 4-Chlor- und 4,6-Dichlor-2-amino-1-hydroxybenzol, 4- oder 5-Nitro-2-amino-1-hydroxybenzol, 4-Chlor-, 4-Methyl- und 4-Acetylamino-6-nitro-2-amino-1-hydroxybenzol, 6-Acetylamino- und 6-Chlor-4-nitro-2-amino-1-hydroxybenzol, 4-Cyan-2-amino-1-hydroxybenzol, 4-Sulfonamido-2-amino-1-hydroxybenzol, 4-Methoxy-2-amino-1-hydroxybenzol, 4-Methoxy-5-chlor-2-amino-1-hydroxybenzol, 4-Methyl-2-amino-1-hydroxybenzol, 4-Chlor-5-nitro-2-amino-1-hydroxybenzol, 3,4,6-Trichlor-2-amino-1-hydroxybenzol, 6-Acetylamino-4-chlor-2-amino-1-hydroxybenzol, 4,6-Dinitro-2-amino-1-hydroxybenzol, 2-Amino-1-hydroxybenzol-4- oder -5-sulfon-säure, 4-Nitro-2-amino-1-hydroxybenzol-6-sulfonsäure, 6-Nitro-2-amino-1-hydroxybenzol-4-sulfonsäure, 4-Chlor-2-amino-1-hydroxybenzol-6-sulfonsäure, 1-Amino-2-hydroxynaphthalin-4-sulfosäure, 1-Amino-2-hydroxy-6-nitronaphtharin-4-sulfosäure, 1-Amino-2-hydroxy-6-chlornaphthalin-4-sulfosäure, 1-Amino-2-hydroxynaphthalin-4,6-disulfosäure, 2-Amino-1-hydroxybenzol-4,6-disulfosäure oder 4-Methylsulfonyl-2-amino-1-hydroxybenzol.

Statt der oben genannten Amine mit Hydroxygruppe kommen für A auch entsprechende Methoxyverbindungen oder entsprechende Verbindungen, deren Hydroxygruppe tosyliert wurde, in Betracht, wie Anisidin, 4-oder 5-Chloranisidin, 4- oder 5-Nitroanisidin, Anisidin-4- oder -5-sulfosäure, oder tosyliertes 1-Hydroxy-2-aminobenzol, wobei die Methoxy- oder O-Tosylgruppe vor oder bei der Metallisierung in eine OH-Gruppe umgewandelt wird. Verbindungen mit diesen Gruppen werden vor allem dann eingesetzt. wenn die entsprechenden 1-Hydroxy-2-amino-Ver-bindungen schlecht kuppeln.

In den bevorzugten Farbstoffen ist A der Rest eines 1-Hydroxy-2-aminobenzols, welcher gegebenenfalls durch Halogen, Nitro, Sulfo oder niedrigmolekulares Alkyl oder Alkoxy substituiert ist, oder der Rest eines 1-Amino-2-hydroxy-4-sulfonaphthalins, welcher gegebenenfalls in 6-Stellung durch Halogen, wie Brom oder insbesondere Chlor, Nitro oder Sulfo substituiert ist.

Der Rest B leitet sich vorzugsweise von folgenden Gruppen von Kupplungskomponenten ab: gegebenenfalls durch niedermolekulares Alkyl oder Alkoxy, Dialkylamino, oder Acylamino subetituierte, in o-Stellung kuppelnde Phenole, wobei Acylamino $C_1$-$C_4$-Alkanoylamino-, $C_1$-$C_4$-Alkyl-sulfonylamino-, $C_1$-$C_4$-Alkoxycarbonylamino-, Aroylamino- oder Arylsulfonylaminoreste bedeutet: Naphthole, die gegebenenfalls mit $C_1$-$C_4$-Alkyl oder Alkoxy, Chlor, Amino, Acylamino oder Sulfo substituiert sind, wobei Acylamino dieselbe

Bedeutung hat, die vorne angegeben ist: 5-Pyrazolone, die in 1-Stellung einen gegebenenfalls mit Chlor, Nitro, $C_1$-$C_4$-Alkyl- oder Alkoxygruppen oder Sulfogruppen substituierten Phenyl- oder Naphthylrest besitzen und in 3-Stellung eine $C_1$-$C_4$-Alkyl-oder Carboxygruppe, insbesondere eine Methylgruppe aufweisen: Acetessigsäureamide, vor allem Acetessigsäureanilide, und Benzoylessigsäureanilide, die im Anilidkern gegebenenfalls mit Chlor, Brom, Nitro, $C_1$-$C_4$-Alkyl-oder Alkoxy- oder Sulfogruppen substituiert sein können: 6-hydroxy-3-cyano- oder 6-Hydroxy-3-carbonamido-4-alkyl-2-pyridone, die in 1-Stellung durch gegebenemfalls substituiertes $C_1$-$C_4$-Alkyl, z.B. Methyl, Isopropyl. β-Hydroxyethyl. β-Aminoethyl oder γ-Isopropoxypropyl oder durch Phenyl substituiert sind, und in 4-Stellung eine $C_1$-$C_4$-Alkyl-gruppe, insbesondere Methyl, tragen können, oder Hydroxychinoline.

Beispiele solcher Kupplungskomponenten sind:

2-Naphthol, 1-Naphthol, 1-Acetylamino-7-naphthol, 1-Propionylamino-7-naphthol, 1-Carbomethoxyamino-7-naphthol, 1-Carboethoxyamino-7-naphthol, 1-Carbopropoxyamino-7-naphthol, 6-Acetyl-2-naphthol, 2-Naphthol-3-, -4-, -5-. -6-, -7- oder -8-sulfosäure, 1-Naphthol-3-, -4- oder -5-sulfosäure, 4-Methyl-1-naphthol, 4-Methoxy-1-naphthol, 4-Acetyl-1-naphthol, 5,5-Dichlor-1-naphthol, 5-Chlor-1-naphthol, 1-Phenyl-3-methylpyrazol-5-on, 1-Phenyl-5-pyrazolon-3-carbonsäureamid, 1-(2'-, 3'-oder 4'-Methylphenyl)-3-methylpyrazol-5-on, 1-(2', 3'- oder 4'-Sulfo-phenyl)-3-methylpyrazol-5-on, 1-(2'-Chlor-5'-sulfophenyl)-3-methyl-pyrazol-5-on, 1-(2'- oder 4'-Methoxyphenyl)-3-methylpyrazol-5-on, 1-(2'-, 3'- oder 4'-Chlorphenyl)-3-methylpyrazol-5-on, 1-(2'-,3'-oder 4'-Nitrophenyl)-3-methylpyrazol-5-on, 1-(2', 5'- oder 3', 4'-Dichlorphenyl)-3-methylpyrazol-5-on, 1-(2',5'-Dichlor-4'-sulfophenyl)-3-methylpyrazol-5-on, Acetoacetanilid, Acetoacetanilid-4-sulfosäure. Acetoacet-o-anisidid, Acetoacet-o-toluidid, Acetoacet-o-chloranilid, Acetoacet-mxylidid, Tetralol, 4-Methylphenol, 3-Dialkylaminophenole, besonders 3-Dimethylamino- oder 3-Diethylaminophenol, 4-Butylphenol, vorzugsweise 4-tert.-Butylphenol, 4-Amylphenol, insbesondere 4-t-Amylphenol, 2-Isopropyl-4-nethylphenol, 2- oder 3-Acetylamino-4-methylphenol, 2-Methoxycarbonylamino-4-methylphenol, 2-Ethoxycarbonylamino-4-methylphenol und 3,4-Dimethylphenol, 1-Methyl-3-cyano-4-ethyl-6-hydroxy-pyridon, 1-Methyl-3-cyano-4-methyl-6-hydroxypyridin, 1-Phenyl-3-carbon-amido-4-methyl-6-hydroxypyridon, 1-Ethyl-4-hydroxy-2-chinolon.

Vorzugsweise stellt die Kupplungskomponente B ein gegebenenfallsdurch Amino und/oder Sulfosubstituiertes 1- oder 2-Naphthol, p-Alkyl($C_1$-$C_6$)-phenol, 1-Phenyl-3-methyl-3-pyrazolon oder Acetessigsäureanilid dar, wobei die Phenylgruppe in den beiden letztgenannten Verbindungen durch $C_1$-$C_4$-Alkyl, $C_1$-$C_4$-Alkoxy, Chlor oder Sulfo substituiert sein kann.

Im Azomethinfarbstoff der 1:2-Chromkomplexe der oben angegebenen Formel I können die Ringe D und E weitere Substituenten tragen.

Vorzugsweise ist der Ring D unsubstituiert oder ein- oder zweimal durch Sulfo, Nitro, Halogen, $C_1$-$C_4$-Alkyl, $C_1$-$C_4$-Alkoxy, $C_1$-$C_4$-Alkylsulfonyl oder Sulfonamid substituiert.

Der Rest D leitet sich beispielsweise von folgenden Aminen ab: 2-Amino-1-hydroxybemzol, 4-Chlor- und 4,6-Dichlor-2-amino-1-hydroxy-benzol, 4- oder 5-Nitro-2-amino-1-hydroxybenzol, 4-Chlor- und 4-methyl-6-nitro-2-amino-1-hydroxybenzol, 6-Acetylamino- und 6-Chlor-4-nitro-2-amino-1-hydroxybenzol, 4-Sulfonamido-2-amino-1-hydroxybenzol, 4-Methylsulfonyl-2-amino-1-hydroxybenzol, 4-Methoxy-2-amino-1-hydroxy-benzol, 4-Methoxy-5-chlor-2-amino-1-hydroxybenzol, 4-Methyl-2-amino-1-hydroxybenzol, 4-Chlor- und 4-Methyl-5-nitro-2-amino-1-hydroxybenzol, 3,4,6-Trichlor-2-amino-1-hydroxybenzol, 4,6-Dinitro-2-amino-1-hydroxy-benzol, 2-Amino-1-hydroxybenzol-4- oder -5-sulfonsäure, 4-Nitro-2-amino-1-hydroxybenzol-6-sulfosäure, 6-Nitro-2-amino-1-hydroxybenzol-4-sulfosäure, 6-Chlor-2-amino-1-hydroxybenzol-4-sulfosäure, 4-Chlor-2-amino-1-hydroxybenzol-6-sulfosäure, 4-Methylsulfonyl-5-nitro-2-amino-1-hydroxybenzol, 4-Methylsulfonyl-6-nitro-2-amino-1-hydroxybenzol, 6-Methyl-2-amino-1-hydroxybenzol-4-sulfosäure.

In bevorzugten Farbstoffen ist der Ring D ein 1-Hydroxy-2-aminobenzol, welches gegebenenfalls durch Sulfo, Nitro, Halogen, Methyl oder Methoxy substituiert ist.

Der Arylazorest E trägt eine Carboxygruppe in o-Stellung zur Azogruppe und kann ausserdem noch z.B. durch Chlor, Sulfo, Methyl oder eine weitere Carboxygruppe nicht jedoch durch Nitro, substituiert sein. Vorzugsweise handelt es sich um den Rest der 2-Aminobenzoesäure.

$Ka^{\oplus}$ stellt ein Kation, beispielsweise ein Alkalikation, wie Lithium, Kalium oder vorzugsweise Natrium, dar. Ferner kann $Ka^{\oplus}$ ein Ammoniumkation oder das Ammoniumsalz eines organischen Amins sein.

Wegen ihrer guten färberischen Eigenschaften besonders bevorzugt sind die Farbstoffe der Formel 11

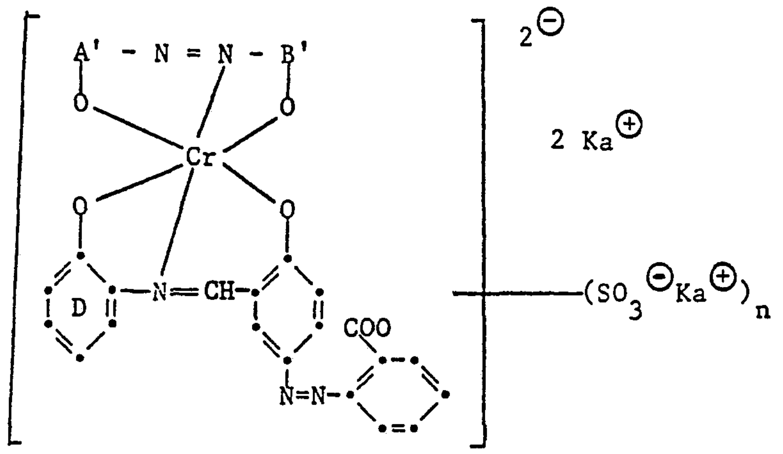

(II)

worin

A' der Rest eines 1-Hydroxy-2-aminobenzols, welcher gegebenenfalls durch Halogen, Nitro, Sulfo oder niedrigmolekulares Alkyl oder Alkoxy substituiert ist, oder der Rest eines 1-Amino-2-hydroxy-4-sulfonaphthalins, welcher gegebenenfalls in 6-Stellung durch Chlor, Nitro oder Sulfo substituiert ist,

B' ein gegebenenfalls durch Amino und/oder Sulfo substituiertes 1-oder 2-Naphthol, p-Alkyl($C_1$-$C_6$)-phenol, 1-Phenyl-3-methyl-5-pyrazolon oder Acetessigsäureanilid, wobei die Phenylgruppe in den beiden letztgenannten Verbindungen durch $C_1$-$C_4$-Alkyl $C_1$-$C_4$ -Alkoxy, Chlor oder Sulfo substituiert sein kann, $Ka^{\ominus}$ ein Kation und

n 1 oder 2 bedeutet, und worin der Ring

D gegebenenfalls durch Sulfo, Nitro, Halogen oder Methyl substituiert ist, wobei A' nicht den Rest von 1-Amino-2-hydroxynaphthalin-4-sulfonsäure bedeuten darf, wenn B' der Rest von 2-Naphthol ist und der Ring D nur in p-Stellung zum Sauerstoff durch Nitro substituiert ist.

Unter diesen sind diejenigen 1:2-Chromkomplexe, welche insgesamt zwei Nitrogruppen enthalten, besonders geeignet.

Die erfindungsgemässen Farbstoffe können nach an sich bekannten Methoden hergestellt werden, beispielsweise indem man den 1:1-Chromkomplex des Azofarbstoffes herstellt und diesen dann mit dem Arylazo-Azomethinfarbstoff oder vorzugsweise mit einem Gemisch des entsprechenden Amins und Aldehyds umsetzt.

Die Herstellung des 1:1-Chromkomplexes wird nach an sich bekannten Methoden, vorzugsweise in saurer Lösung mit Chrom-III-salzen durchgeführt. Anschliessend wird der 1:1-Chromkomplex in schwach saurem, neutralen oder schwach alkalischem Medium zum 1:2-Chromkomplex umgesetzt.

Die nach dem obigen Verfahren erhältlichen neuen Metallkomplexfarbstoffe der Formel I, werden in Form ihrer Salze, insbesondere Alkali-, vor allen Natrium- oder Lithiumsalze, oder auch Ammoniumsalze oder Salze von organischen Aminen mit positiv geladenem Stickstoffatom isoliert und eignen sich zum Färben und Bedrucken verschiedener Stoffe gegebenenfalls in Gegenwart eines Egalisierhilfmittels, vor allem aber zum Färben und Bedrucken stickstoffhaltiger Materialien, wie Seide, Wolle, sowie auch für synthetische Fasern aus Polyamiden oder Polyurethanen und insbesondere für Leder.

Man erhält orange oder braune bis olive Färbungen mit guten Echtheiten, insbesondere Licht- und Nassechtheiten.

Die bevorzugte Verwendung der erfindungsgemässen Farbstoffe liegt im Färben von Wolle, Polyamid und insbesondere von Pelzen oder Leder, wobei alle Ledersorten geeignet sind, z.B. Chromleder, nachgegerbtes Leder oder Velourleder von Ziege, Rind oder Schwein.

Die nachfolgenden Beispiele dienen der Erläuterung der Erfindung, ohne sie darauf zu beschränken. Teile bedeuten Gewichtsteile und Prozente Gewichtsprozente. Die Temperaturen sind in Grad Celsius angegeben.

**Beispiel 1**

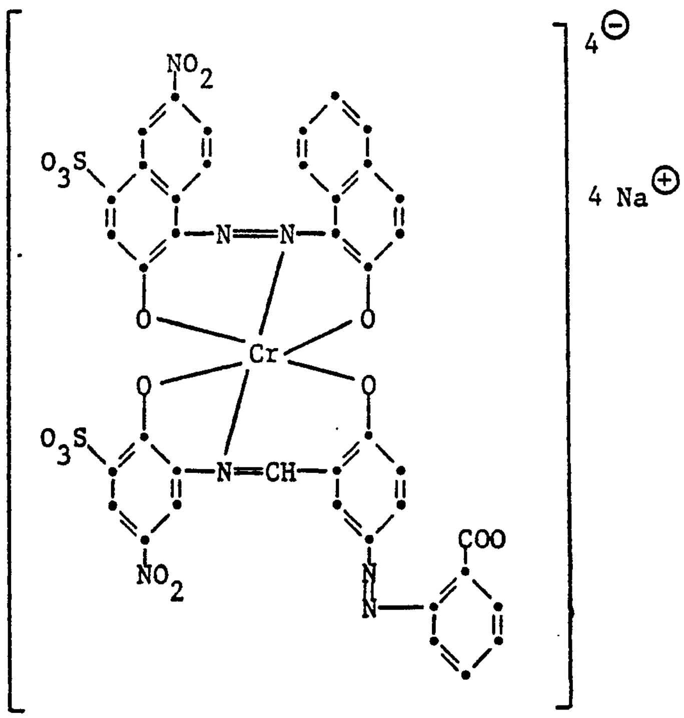

Der 1:1-Chromkomplex, der 43,9 Teile des Farbstoffes aus diazotierter 6-Nitro-1-amino-2-hydroxynaphthalin-4-sulfonsäure und 2-Hydroxynaph-thalin sowie 5,2 Teile Chrom enthält, wird in 400 Teile Wasser eingetragen und mit 23,4 Teilen 4-Nitro-2-amino-1-hydroxybenzol-6-sulfonsäure und 27 Teilen des Monoazofarbstoffes aus diazotierter 2-Amino-benzoesäure und Salicylaldehyd versetzt. Das Reaktionsgemisch wird auf 90-95° erwärmt, mit Natriumhydroxid auf pH 6-6,5 gestellt und so lange bei dieser Temperatur gehalten, bis die Ausgangsprodukte nicht mehr nachweisbar sind. Nach beendeter Reaktion wird der Farbstoff durch Eindampfen isoliert. Man erhält ein dunkles Pulver, das sich in Wasser mit brauner Farbe löst und Leder in dunkelbraunen Tönen von guten Echtheiten färbt.

**Beispiel 2**

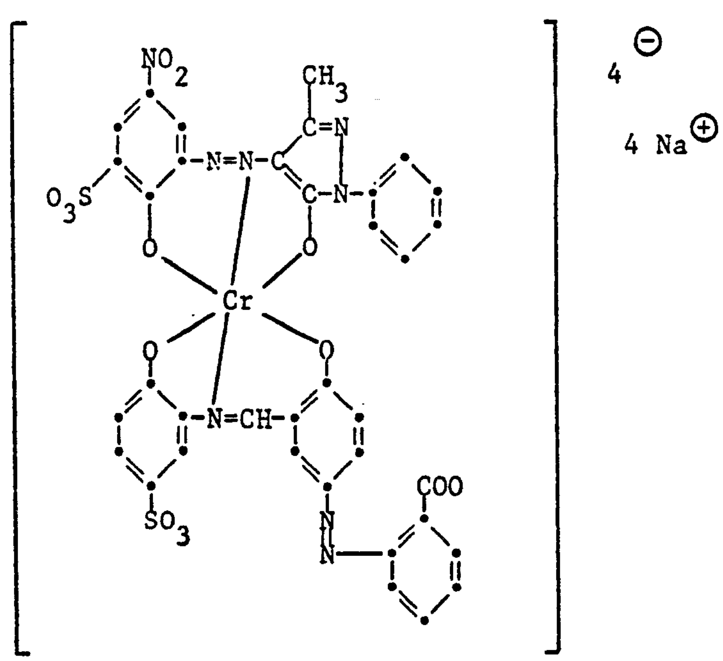

In 500 Teilen Wasser suspendiert man 46,9 Teile der komplexen Chromverbindung vom Typus 1 Atom Chrom: 1 Molekül Farbstoff, welche 5,2 Teile Chrom und 41,9 Teile Monoazofarbstoff aus diazotierter 4-Nitro-2-amino-1-hydroxybenzol-6-sulfonsäure und 1-Phenyl-3-methyl-5-pyrazolon enthält, mit 15,9 Teilen 2-Amino-1-hydroxybenzol-4-sulfonsäure und 27 Teilen des Monoazofarbstoffes aus diazotierter 2-Aminobenzoesäure und Salicylaldehyd. Das Reaktionsgemisch wird hierauf auf 90-95° erwärmt, mit Natriumhydroxid auf pH 7-7,5 gestellt und so lange bei dieser Temperatur und konstantem pH gehalten, bis die Ausgangsprodukte nicht mehr nachweisbar sind. Nach beendeter Reaktion wird das Wasser durch Eindampfen oder Sprühtrocknung entfernt. Man erhält ein dunkles Pulver, das sich in Wasser mit oranger Farbe löst und Leder in lichtechten orangen Tönen färbt.

**Beispiel 3**

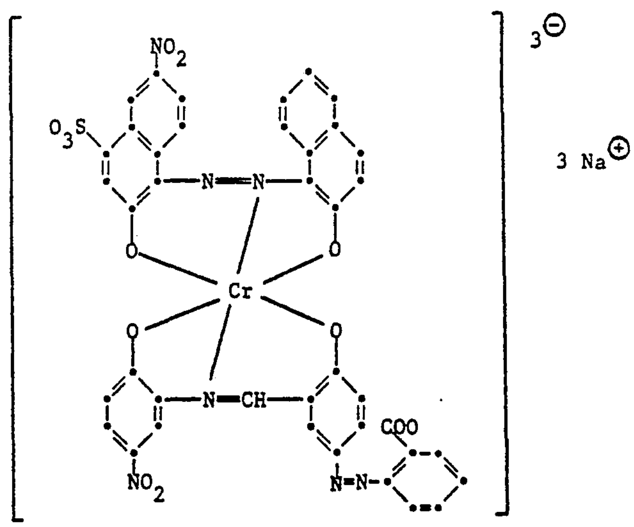

Der 1:1-Chromkomplex, der 41,9 Teile des Farbstoffes aus diazotierter 6-Nitro-2-hydroxy-1-aninonaphthalin-4-sulfonsäure und 2-Hydroxynaphthalin sowie 5,2 Teile Chrom enthält, wird in 400 Teile Wasser eingetragen, mit 15,4 Teilen 4-Nitro-2-amino-1-hydroxybenzol und 27 Teilen des Monoazofarbstoffes aus diazotierter 2-Aminobenzoesäure und Salicylaldehyd versetzt und bei pH 7-7,5 und 85-90° so lange gerührt, bis die Ausgangsprodukte nicht mehr nachweisbar sind. Anschliessend wird das Wasser durch Eindampfen entfernt. Man erhält ein dunkles Pulver, das sich in Wasser mit brauner Farbe löst und Leder in rotstichigbraunen Tönen von guten Echtheiten färbt.

**Beispiel 4**

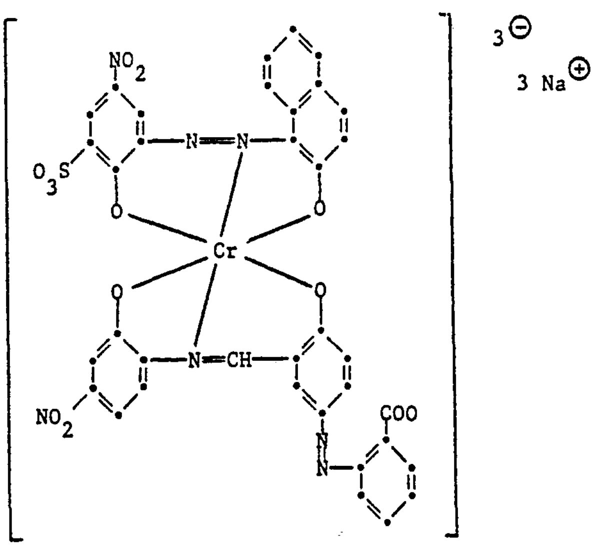

In 500 Teilen Wasser suspendiert man 43,9 Teile der komplexen Chromverbindung vom Typus 1 Atom Chrom: 1 Molekül Farbstoff, welche 5,2 Teile Chrom und 38,9 Teile Monoazofarbstoff aus diazotierter 4-Nitro-2-amino-1-hydroxybenzol-6-sulfonsäure und 2-Hydroxynaphthalin enthält, mit 15,4 Teilen 5-Nitro-2-amino-1-hydroxybenzol und 27 Teilen des Monoazofarbstoffes aus diazotierter 2-Aminobenzoesäure und Salicylaldehyd. Das Reaktionsgemisch wird auf 90-95° erwärmt, mit Natriumhydroxid auf pH 7-7,5 gestellt und so lange bei dieser Temperatur und konstantem pH gehalten, bis die Ausgangsprodukte nicht mehr nachweisbar sind. Nach beendeter Reaktion wird der Farbstoff durch Natriumchloridzugabe abgeschieden, abfiltriert und getrocknet. Er stellt ein dunkles Pulver dar, das sich in Wasser mit brauner Farbe löst und Leder in dunkelbraunen Tönen von sehr guter Lichtechtheit färbt.

Arbeitet man wie in den Beispielen 1-4 beschrieben, verwendet jedoch den 1:1 Chromkomplex des in der folgenden Tabelle in Spalte 2 aufgefuhrten Azofarbstoffes und setzt diesen mit dem in Spalte 3 aufgeführten Azomethinfarbstoff, bzw. mit den diesen bildenden Aminen und Aldehyden, um, so erhält man 1:2-Chromkomplexe, welche Leder in der in Spalte 4 angegebenen Nuance färben.

**Tabelle**

| No. | Azofarbstoff | Azomethinfarbstoff | Nuance |
|---|---|---|---|
| 1 | 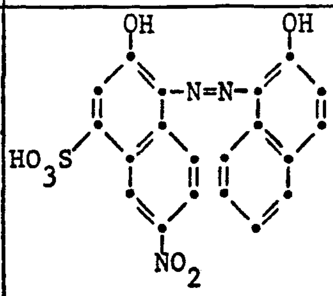 | 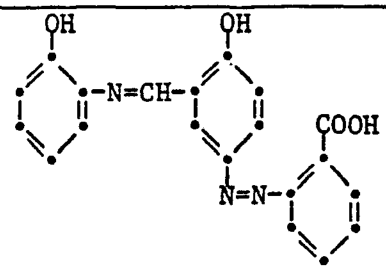 | braun |
| 2 | do | 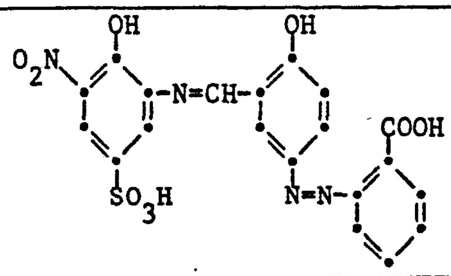 | dunkel-braun |
| 3 | do | 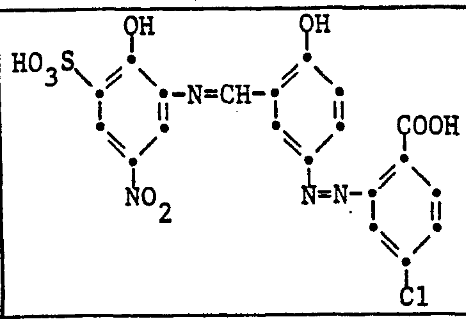 | gelbst. dunkel-braun |

Tabelle (Fortsetzung)

| Nr. | Azofarbstoff | Azomethinfarbstoff | Nuance |
|---|---|---|---|
| 4 | 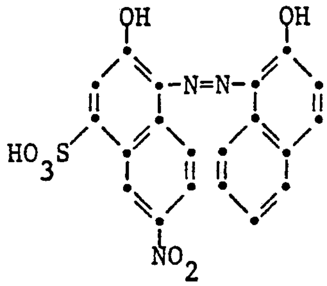 | 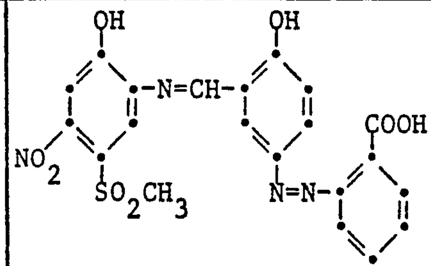 | dunkel-braun |
| 5 | do | 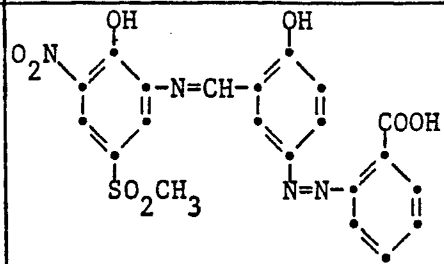 | do |
| 6 | do | 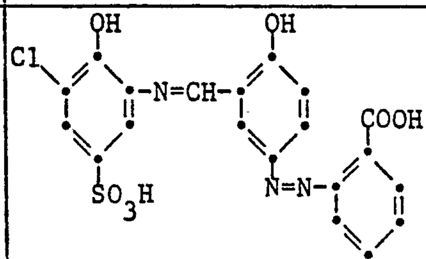 | do |
| 7 | do | 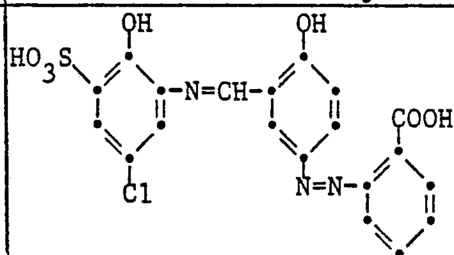 | do |
| 8 | do | 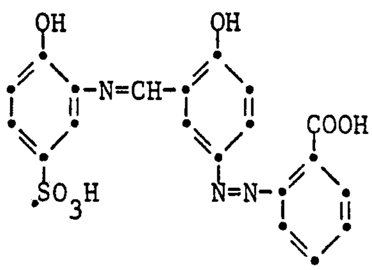 | do |

Tabelle (Fortsetzung)

| Nr. | Azofarbstoff | Azomethinfarbstoff | Nuance |
|---|---|---|---|
| 9 | 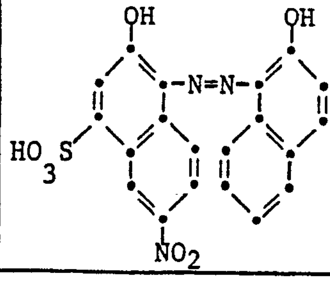 | 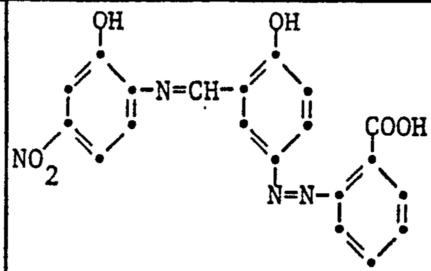 | braun |
| 10 | do | 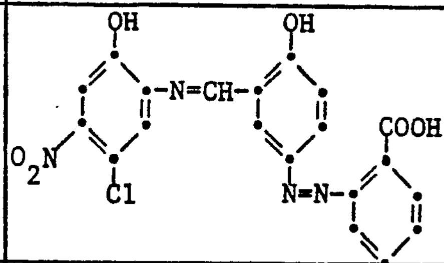 | do |
| 11 | do | 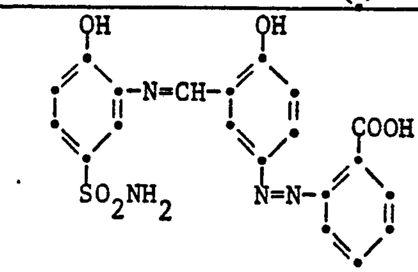 | do |
| 12 | do | 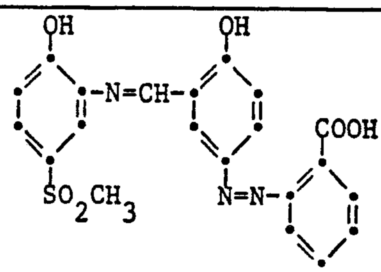 | do |
| 13 | do | 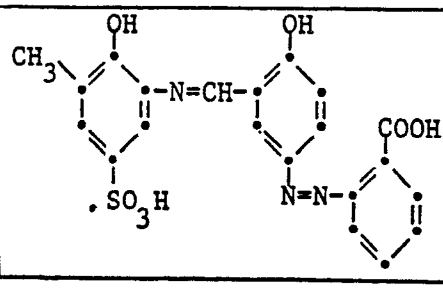 | do |

Tabelle (Fortsetzung)

| Nr. | Azofarbstoff | Azomethinfarbstoff | Nuance |
|---|---|---|---|
| 14 | 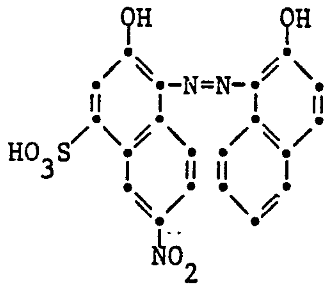 | 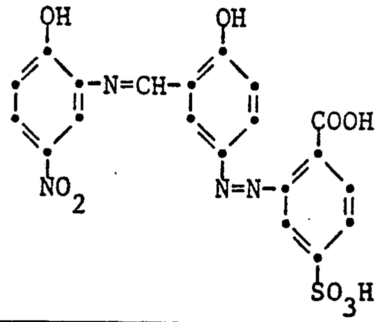 | rotst. braun |
| 15 | do | 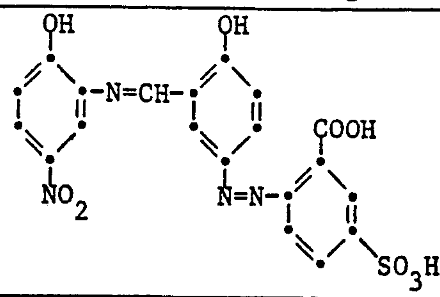 | do |
| 16 | do | 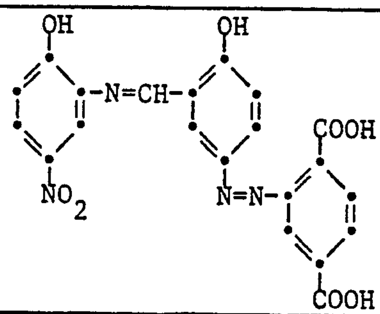 | do |
| 17 | 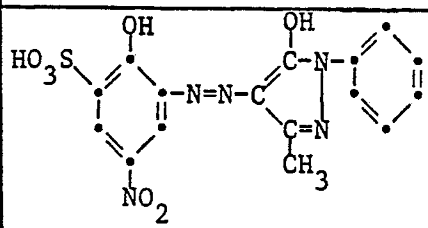 | 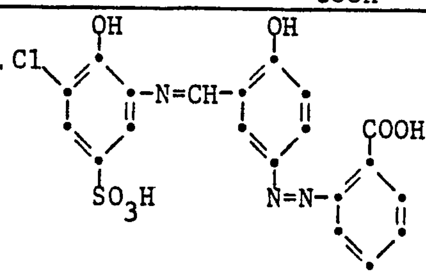 | orange |
| 18 | do | 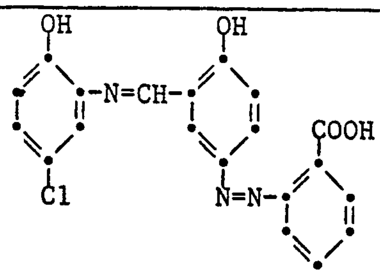 | orange |

Tabelle (Fortsetzung)

| Nr. | Azofarbstoff | Azomethinfarbstoff | Nuance |
|---|---|---|---|
| 19 | 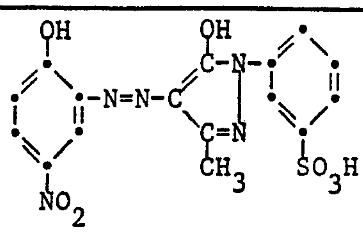 | 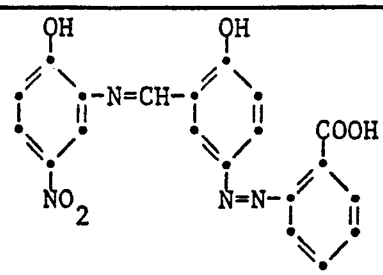 | orange |
| 20 | do | 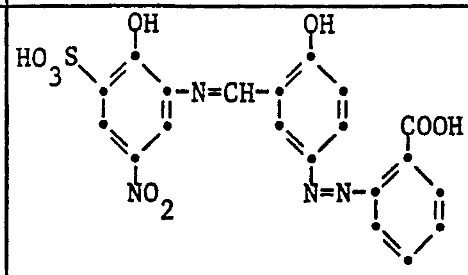 | orange |
| 21 | 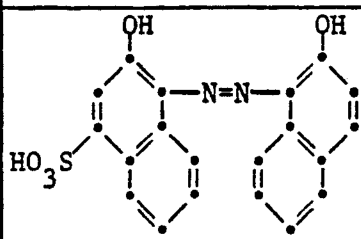 | 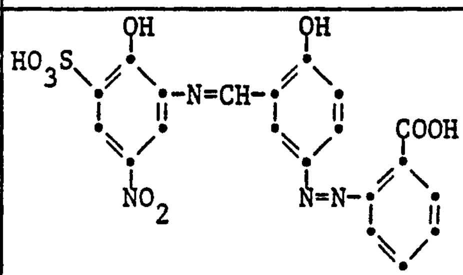 | olive |
| 22 | do | 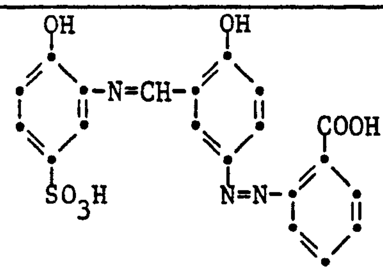 | olive-braun |
| 23 | do | 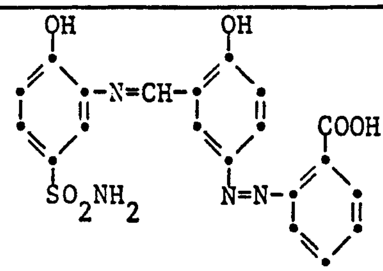 | do |
| 24 | do | 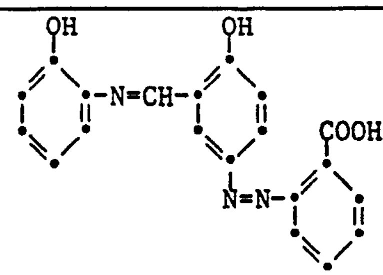 | do |

Tabelle (Fortsetzung)

| Nr. | Azofarbstoff | Azomethinfarbstoff | Nuance |
|---|---|---|---|
| 25 | 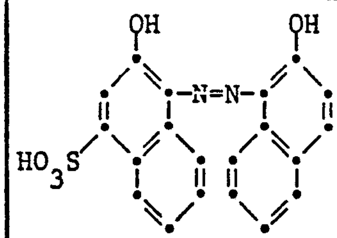 | 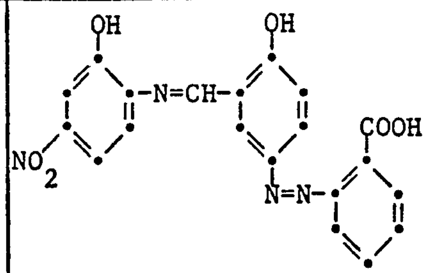 | braun |
| 26 | 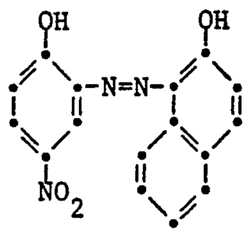 | 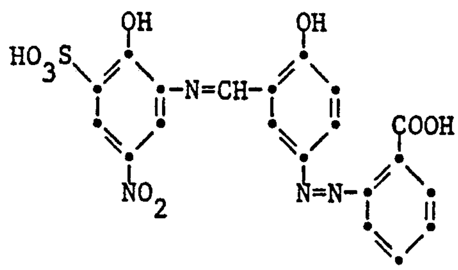 | braun |
| 27 | 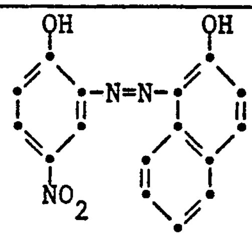 | 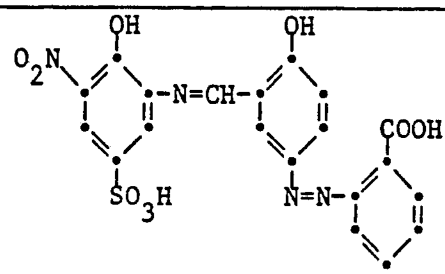 | do |
| 28 | 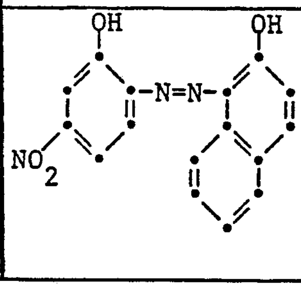 | 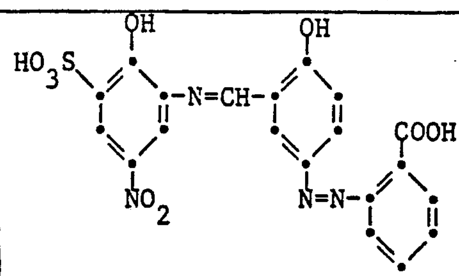 | olive |

Tabelle (Fortsetzung)

| Nr. | Azofarbstoff | Azomethinfarbstoff | Nuance |
|---|---|---|---|
| 29 | 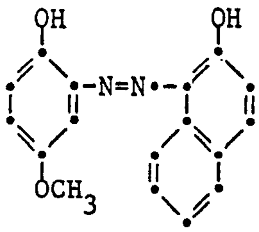 | 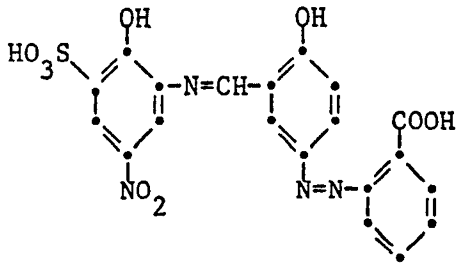 | braunst. olive |
| 30 | 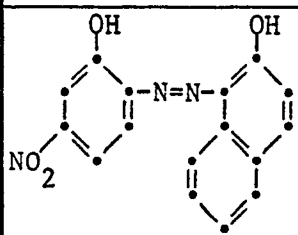 | 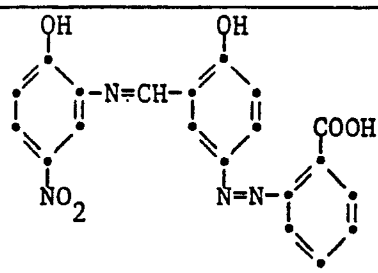 | olive |
| 31 | 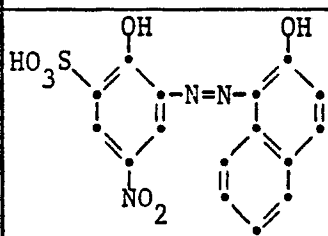 | 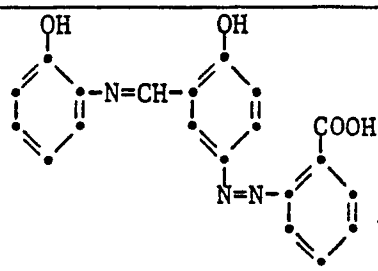 | braun |
| 32 | do | 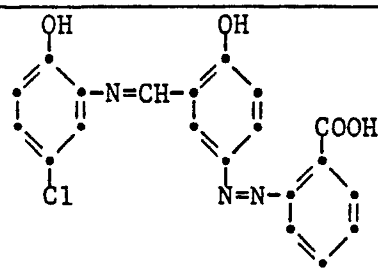 | do |
| 33 | do | 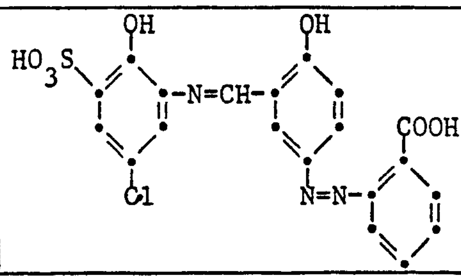 | do |

Tabelle (Fortsetzung)

| Nr. | Azofarbstoff | Azomethinfarbstoff | Nuance |
|---|---|---|---|
| 34 | 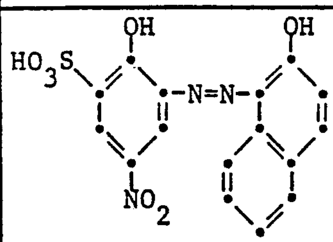 | 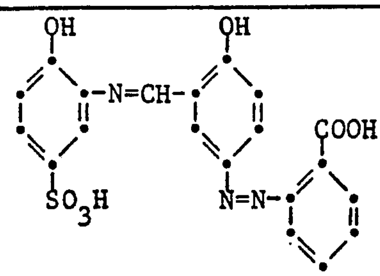 | braun |
| 35 | 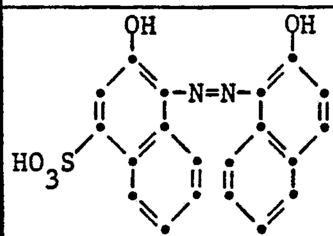 | 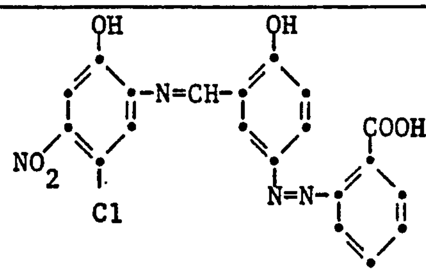 | dunkel-braun |
| 36 | 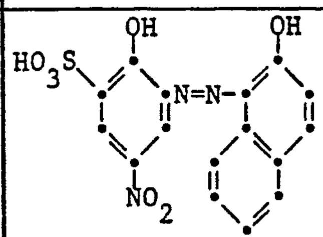 | 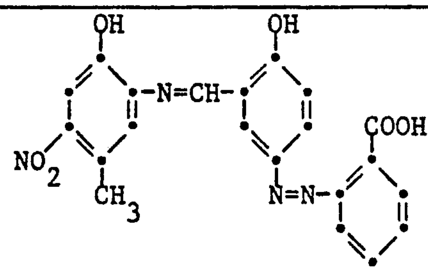 | do |
| 37 | do | 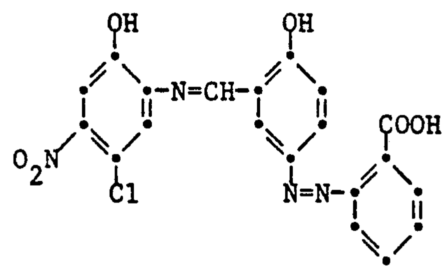 | do |

Tabelle (Fortsetzung)

| Nr. | Azofarbstoff | Azomethinfarbstoff | Nuance |
|---|---|---|---|
| 38 | 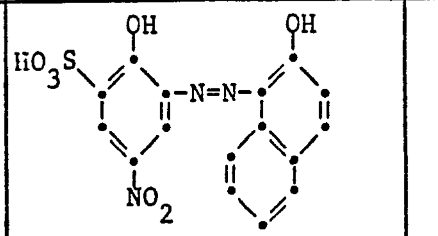 | 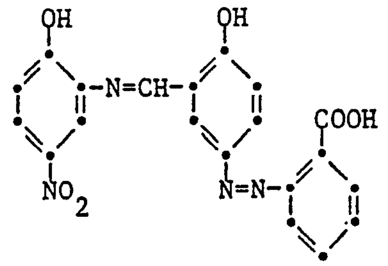 | braun |
| 39 | do | 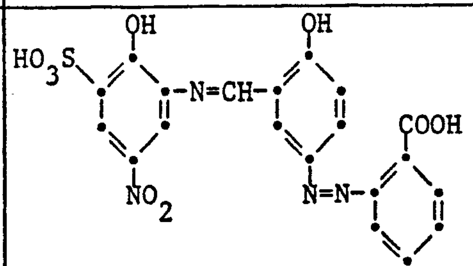 | do |
| 40 | 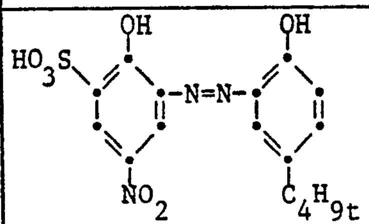 | 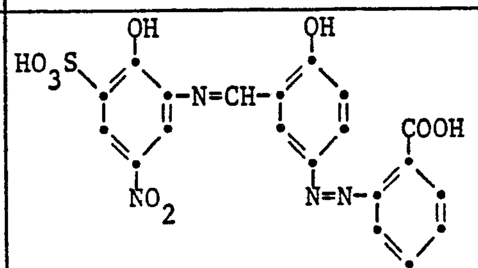 | do |
| 41 | 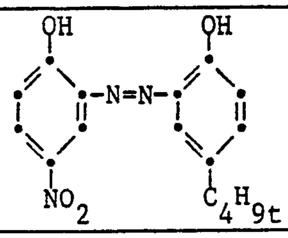 | do | do |
| 42 | 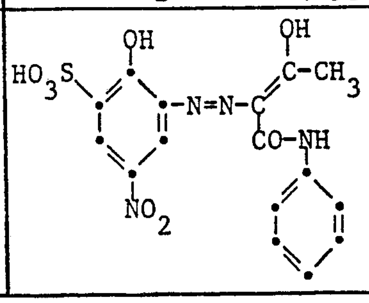 | 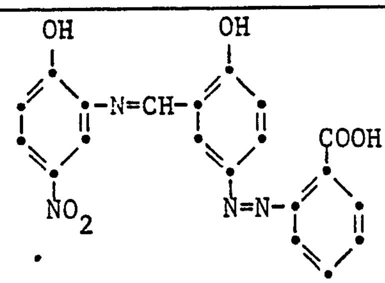 | braunst. gelb |

Tabelle (Fortsetzung)

| Nr. | Azofarbstoff | | Nuance |
|---|---|---|---|
| 43 | 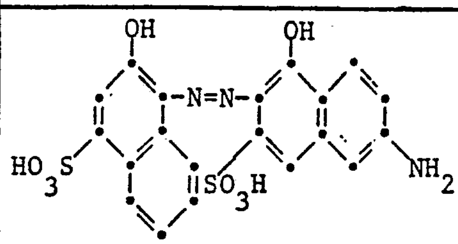 | 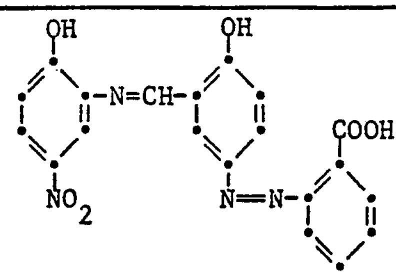 | braun olive |
| 44 | do | 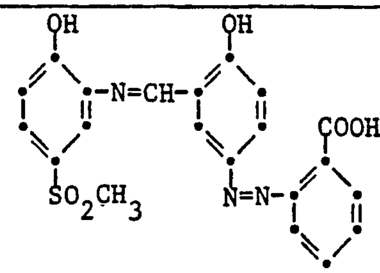 | olive |
| 45 | do | 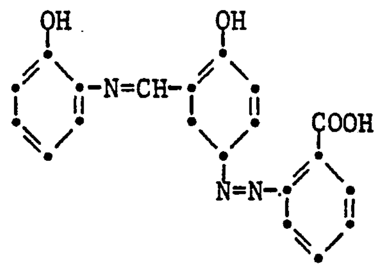 | braun grau |
| 46 | do | 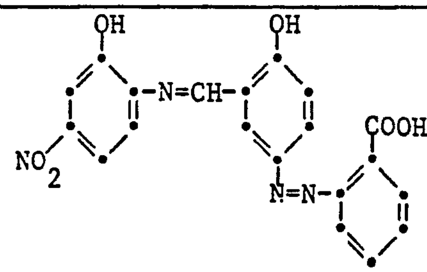 | do |
| 47 | 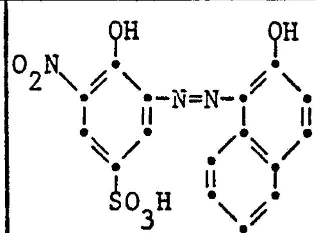 | 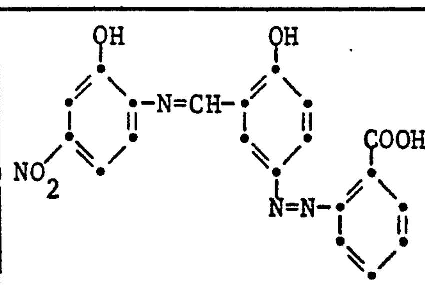 | dunkel-braun |

Tabelle (Fortsetzung)

| Nr. | Azofarbstoff | Azomethinfarbstoff | Nuance |
|---|---|---|---|
| 48 | 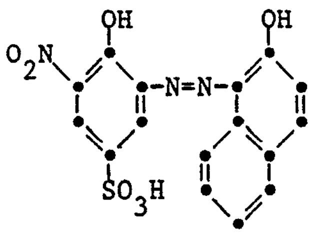 | 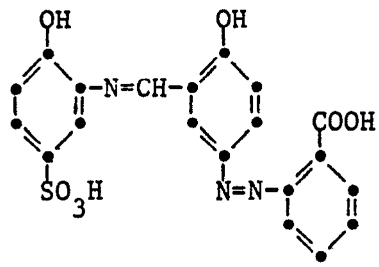 | braun |
| 49 | do | 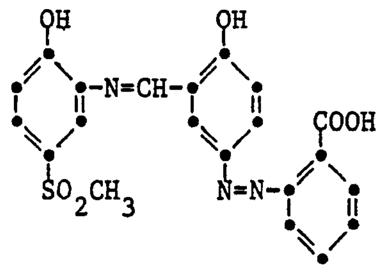 | do |
| 50 | do | 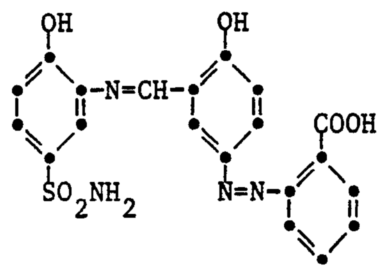 | do |
| 51 | 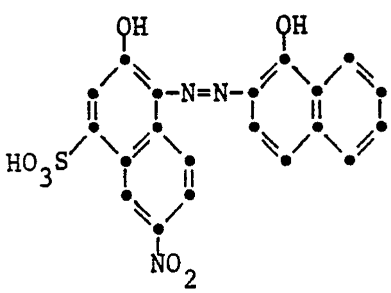 | 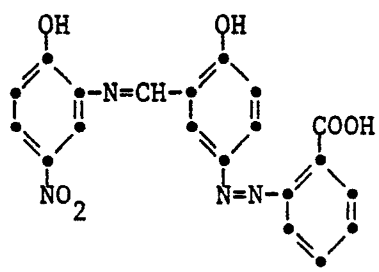 | dunkel-braun |
| 52 | do | 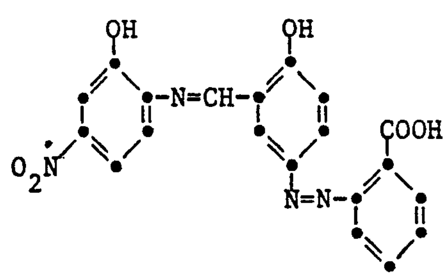 | do |

Tabelle (Fortsetzung)

| Nr. | Azofarbstoff | Azomethinfarbstoff | Nuance |
|---|---|---|---|
| 53 | 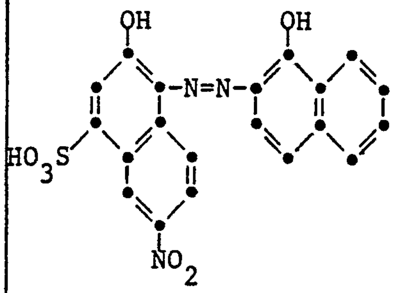 | 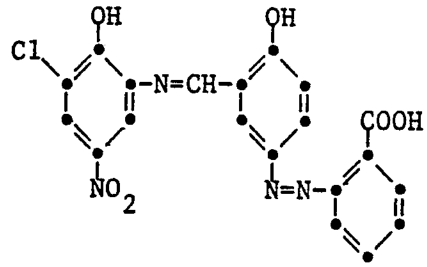 | dunkel-braun |
| 54 | do | 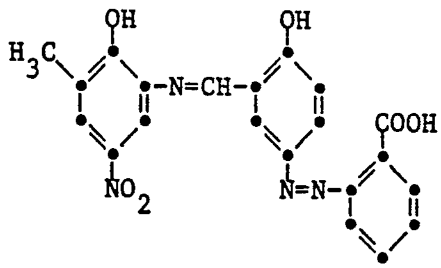 | do |
| 55 | 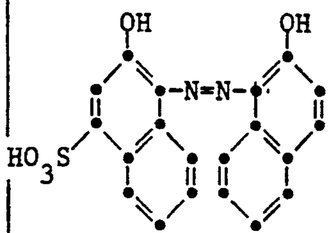 | 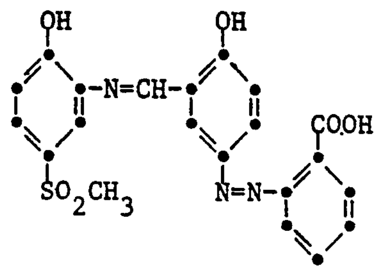 | olive-stichig braun |
| 56 | 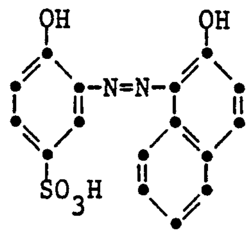 | 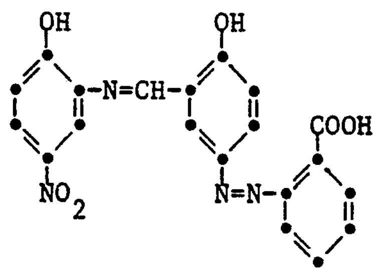 | braun |
| 57 | do | 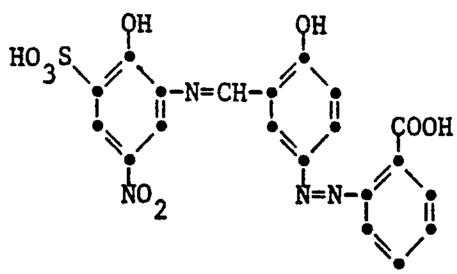 | gelb-stichig braun |

| Nr. | Azofarbstoff | Azomethinfarbstoff | Nuance |
|---|---|---|---|
| 58 | 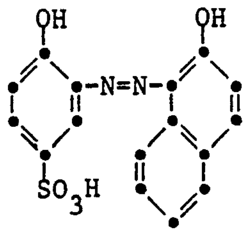 | 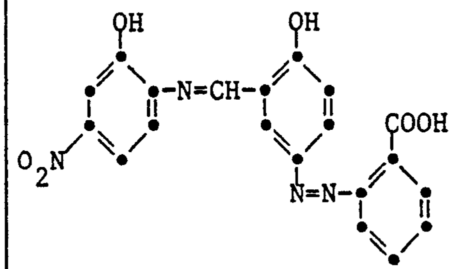 | braun |
| 59 | do | 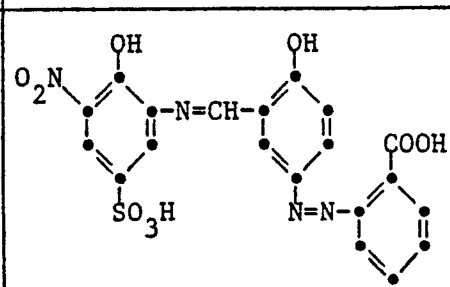 | do |
| 60 | 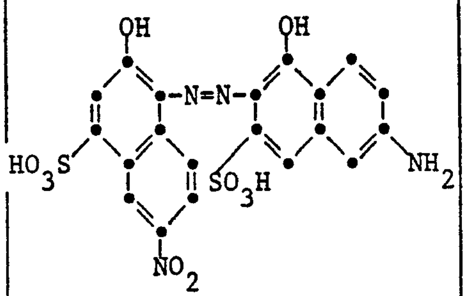 | 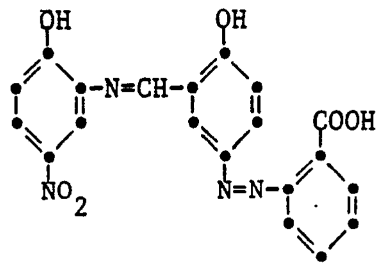 | olive |
| 61 | do | 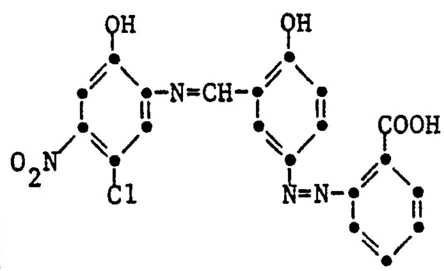 | grau-stichig braun |
| 62 | do | 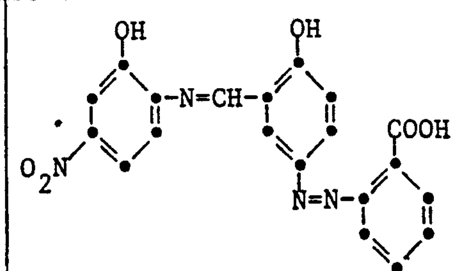 | do |

| Nr. | Azofarbstoff | Azomethinfarbstoff | Nuance |
|---|---|---|---|
| 63 | 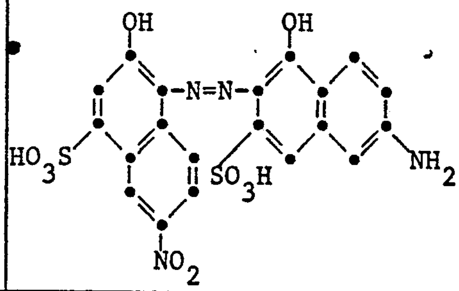 | 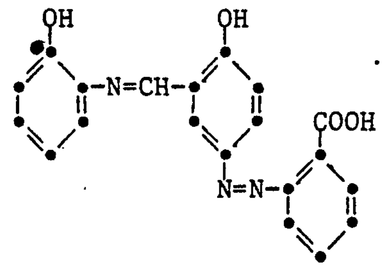 | grau-stichig olive |
| 64 | 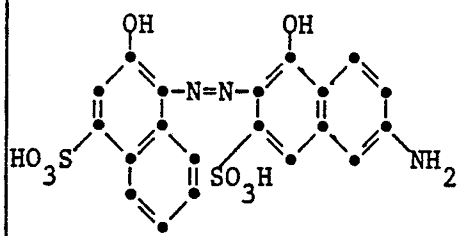 | 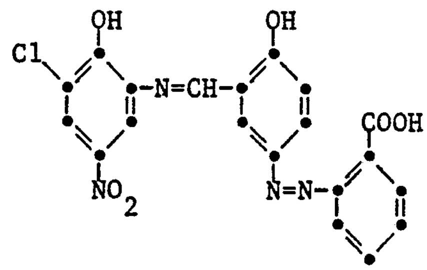 | braun-olive |
| 65 | do | 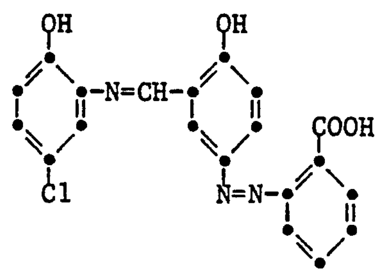 | olive |
| 66 | do | 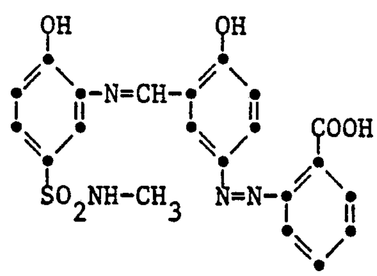 | olive |
| 67 | 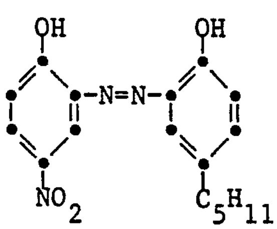 | 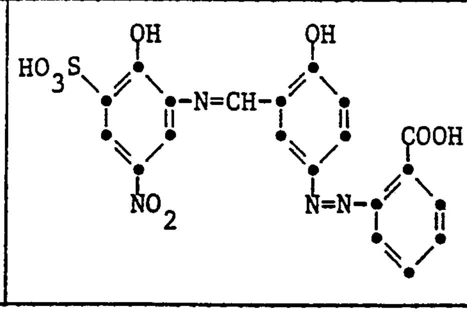 | braun |

| Nr. | Azofarbstoff | Azomethinfarbstoff | Nuance |
|---|---|---|---|
| 68 | 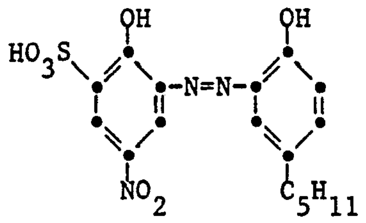 | 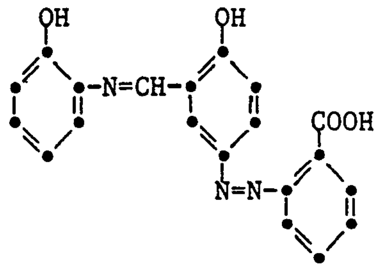 | gelb-stichig braun |
| 69 | 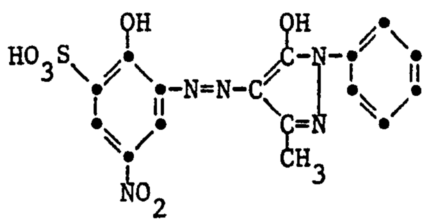 | 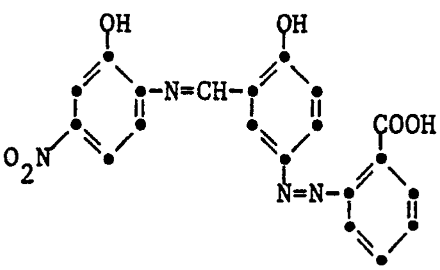 | braun-stichig orange |
| 70 | 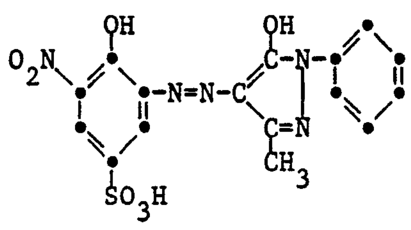 | do | do |
| 71 | 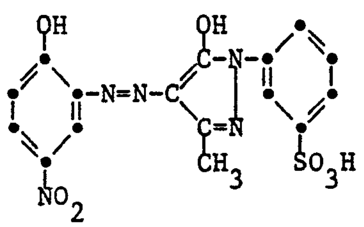 | do | do |

**Färbevorschrift für Leder**

100 Teile Bekleidungsveloursleder (Trockengewicht) werden bei 50° in einer Lösung von 1000 Volumenteilen Wasser und 2 Teilen Ammoniak 24%ig während 2 Stunden aufgewalkt und anschliessend bei 60° in einer Lösung von 1000 Volumenteilen Wasser, 2 Teilen Ammoniak 24%ig und 6 Teilen Farbstoff aus Beispiel 4 während 1 Stunde gefärbt. Hierauf gibt man eine Lösung von 40 Volumteilen Wasser und 4 Teilen Ameisensäure 55%ig zu und färbt noch weitere 30 Minuten. Dann wird das Leder gut gespült und gegebenenfalls noch mit 2 Teilen eines Dicyandiamidformaldehyd-Kondensationsproduktes während 30 Minuten bei 50° behandelt.

In gleicher Weise lassen sich andere Veloursleder sowie Handschuhleder färben.

Die so erhaltenen dunkel-braunen Färbungen zeichnen sich durch gute Echtheiten und gute Deckvermögen aus.

**Färbevorschrift für Polyamid**

100 Teile Polyamidstrickgarn werden bei 50° in ein Färbebad eingeführt, das auf 4000 Teile Wasser 2 Teile des Farbstoffes des Beispiels 4, 4 Teile Ammoniumsulfat und 2 Teile eines Egalisierhilfsmittels enthält. Die Flotte wird im Verlaufe von 45 Minuten zum Sieden gebracht und während weiteren 45 Minuten bei Kochtemperatur gehalten. Darauf wird das Färbegut herausgenommen, mit kaltem Wasser gründlich gespült und getrocknet. Man erhält ein braungefärbtes Polyamid mit guten Echtheitseigenschaften.

**Färbevorschrift für Wolle**

100 Teile Wollstrickgarn werden bei 50° in ein Färbebad eingeführt, das auf 4000 Teile Wasser 2 Teile des Farbstoffs des Tabellenbeispiels 4, 4 Teile Essigsäure 80 % und 2 Teile eines Egalisierhilfsmittels enthält. Die Flotte wird im Verlaufe von 45 Minuten zum Sieden gebracht und während 45 Minuten bei Kochtemperatur gehalten. Darauf wird das Färbegut herausgenommen, mit kaltem Wasser gründlich gespült und getrocknet. Man erhält eine braungefärbte Wolle mit guten Echtheitseigenschaften.

**Patentansprüche**

1. 1:2-Chromkomplexfarbstoffe der Formel I

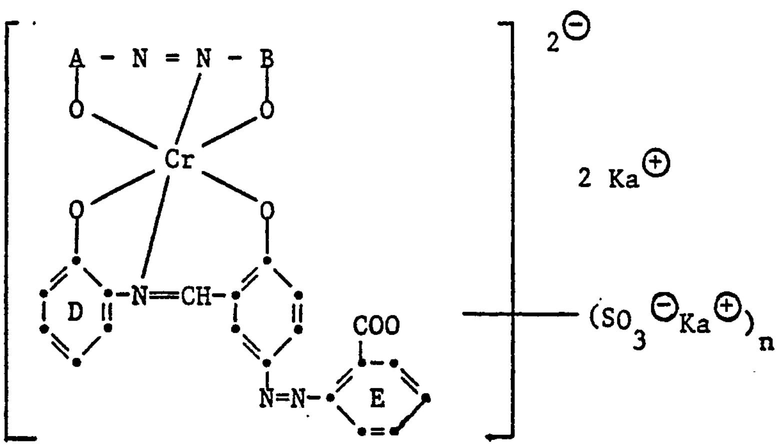

(I)

worin
A den Rest einer Diazokomponente der Benzol- oder Naphthalinreihe, welche die Hydroxygruppe in o-Stellung zur Azogruppe trägt,
B den Rest einer Kupplungskomponente, welche die Hydroxygruppe in Nachbarstellung zur Azogruppe trägt,
n 1 oder 2 und
$Ka^{\oplus}$ ein Kation bedeutet,
und worin die Ringe D und E weitere Substituenten tragen können, der Ring E jedoch keine Nitrogruppe und wobei A nicht den Rest von 1-Amino-2-hydroxynaphthalin-4-sulfosäure bedeuten darf, wenn B der Rest von 2-Naphthol ist, der Ring D nur in p-Stellung zum Sauerstoff durch Nitro substituiert und E nicht weitersubstituiert ist.

2. Farbstoffe gemäss Anspruch 1, worin A den Rest eines 1-Hydroxy-2-aminobenzols, welcher gegebenenfalls durch Halogen, Nitro, Sulfo oder niedrigmolekulares Alkyl oder Alkoxy substituiert ist, oder den Rest eines 1-Amino-2-hydroxy-4-sulfonaphthalins, welcher gegebenenfalls in 6-Stellung durch Halogen, wie Brom oder insbesondere Chlor, Nitro oder Sulfo substituiert ist, bedeutet.

3. Farbstoffe gemäss Ansprüchen 1 oder 2, worin B ein gegebenenfalls durch Amino und/oder Sulfo substituiertes 1- oder 2-Naphthol, p-Alkyl-($C_1$-$C_6$)-phenol, 1-Phenyl-3-methyl-5-pyrazolon oder Acetessigsäureanilid darstellt, wobei die Phenylgruppe in den beiden letztgenannten Verbindungen durch $C_1$-$C_4$-Alkyl, $C_1$-$C_4$-Alkoxy, Chlor oder Sulfo substituiert sein kann.

4. Farbstoff gemäss einem der Ansprüche 1-3, worin der Ring D gegebenenfalls durch Sulfo, Nitro, Halogen, Methyl oder Methoxy substituiert ist.

5. Farbstoffe gemäss einem der Ansprüche 1-4, worin der Ring E nicht weitersubstituiert ist oder durch Chlor, Sulfo, Methyl oder eine weitere Carboxygruppe substituiert ist.

6. Farbstoffe gemäss Anspruch 1 der Formel II

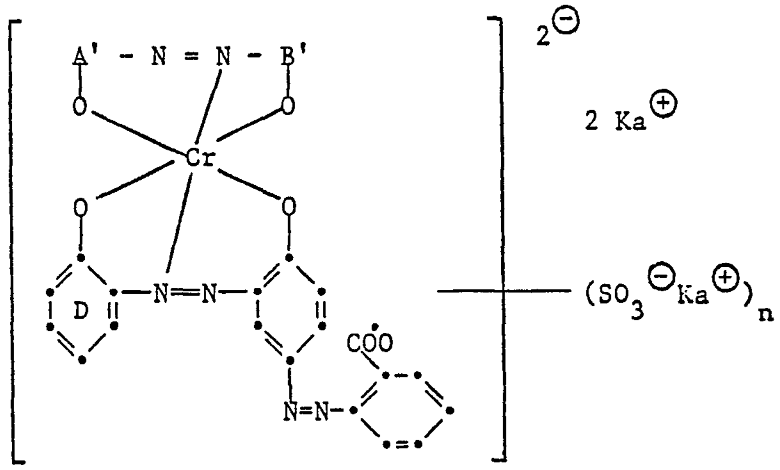

(II)

worin

A' den Rest eines 1-Hydroxy-2-aminobenzols, welcher gegebenenfalls durch Halogen, Nitro, Sulfo oder niedrigmolekulares Alkyl oder Alkoxy substituiert ist, oder den Rest eines 1-Amino-2-hydroxy-4-sulfonaphthalins, welcher gegebenenfalls in 6-Stellung durch Chlor, Nitro oder Sulfo substituiert ist,

B' ein gegebenenfalls durch Amino und/oder Sulfo substituiertes 1-oder 2-Naphthol, p-Alkyl($C_1$-$C_6$)-phenol, 1-Phenyl-3-methyl-5-pyrazolon oder Acetessigsäureanilid. wobei die Phenylgruppe in den beiden letztgenannten Verbindungen durch $C_1$-$C_4$-Alkyl, $C_1$-$C_4$-Alkoxy, Chlor oder Sulfo substituiert sein kann und

n 1 oder 2 bedeutet. und worin der Ring

D gegebenenfalls durch Sulfo, Nitro, Halogen oder Methyl substituiert ist, wobei A' nicht den Rest von 1-Amino-2-hydroxynaphthalin-4-sulfo-säure bedeuten darf, wenn B' der Rest von 2-Naphthol ist, und der Ring D nur in p-Stellung zum Sauerstoff durch Nitro substituiert ist.

7. Farbstoffe gemäss Anspruch 6, welche insgesamt 2 Nitrogruppen enthalten.

8. Verfahren zur Herstellung von Farbstoffen der Formel 1, dadurch gekennzeichnet, dass man den 1:1-Chromkomplex des Azofarbstoffes herstellt und diesen dann mit dem Arylazo-Azomethinfarbstoff oder vorzugsweise mit einem Cemisch des entsprechenden Amins und Aldehyds umsetzt.

9. Verwendung von Farbstoffen der Formel 1 zum Färben von Wolle, Polyamid und insbesondere von Leder oder Pelzen.

## Claims

1. A 1:2 chrome complex dye of the formula I

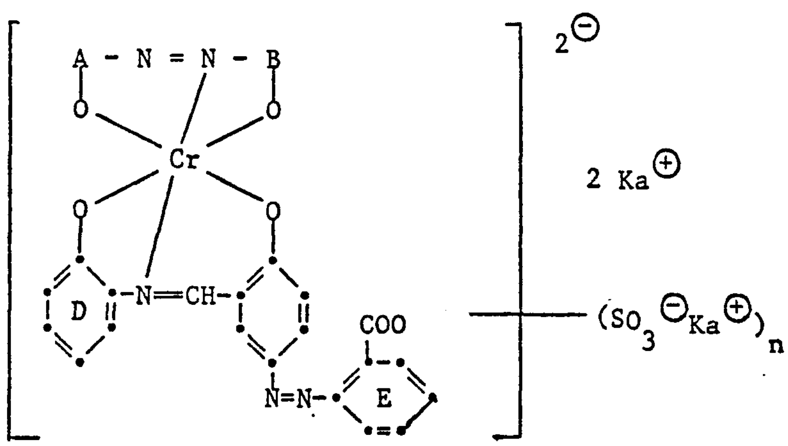

(I)

wherein

A is the radical of a diazo component of the benzene or naphthalene series, which carries the hydroxyl group in the o-position with respect to the azo group,

B is the radical of a coupling component which carries the hydroxyl group in the position adjacent to the azo group,

n is 1 or 2, and

$Ka^{\oplus}$ is a cation,

and wherein the rings D and E can carry further substituents, the ring E however cannot carry a nitro group, with the proviso that A cannot be the radical of 1-amino-2-hydroxynaphthalene-4-sulfonic acid when B is the radical of 2-naphthol, the ring D is substituted only by nitro in the p-position with respect to the oxygen atom and E is not further substituted.

2. A dye according to claim 1, wherein A is the radical of a 1-hydroxy-2-aminobenzene, which is unsubstituted or substituted by halogen, nitro, sulfo or low-molecular alkyl or alkoxy, or is the radical of a 1-amino-2-hydroxy-4-sulfonaphthalene, which is unsubstituted or substituted in the 6-position by halogen, such as bromine or, especially chlorine, or by nitro or sulfo.

3. A dye according to either of claims 1 or 2, wherein B is a 1- or 2-naphthol which is unsubstituted or substituted by amino and/or sulfo, or is p-alkyl($C_1$-$C_6$)-phenol, 1-phenyl-3-methyl-5-pyrazolone or acetoacetic acid anilide, and the phenyl group in the two last-mentioned compounds can be substituted by $C_1$-$C_4$-alkyl, $C_1$-$C_4$-alkoxy, chlorine or sulfo.

4. A dye according to any one of claims 1-3, wherein the ring D is unsubstituted or substituted by sulfo, nitro, halogen, methyl or methoxy.

5. A dye according to any one of claims 1-4, wherein the ring E is not further subatituted or is substituted by chlorine, sulfo, methyl or a further carboxyl group.

6. A dye according to claim 1 of the formula II

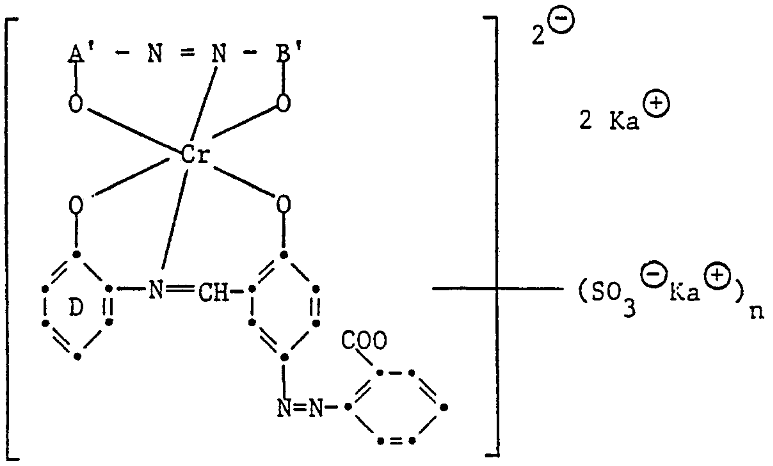

(II)

wherin

A' is the radical of a 1-hydroxy-2-aminobenzene, which is unsubstituted or substituted by halogen, nitro sulfo or low-molecular alkyl or alkoxy, or is the radical of a 1-amino-2-hydroxy-4-sulfonaphthalene, which is unsubstituted or substituted in the 6-position by chlorine, nitro or sulfo,

B' is a 1- or 2-naphthol which is unsubstituted or substituted by amino and/or sulfo, or is p-alkyl-($C_1$-$C_6$)-phenol, 1-phenyl-3-methyl-5-pyrazolone or acetoacetic acid anilide, and the phenyl group in the two last-mentioned compounds can be substituted by $C_1$-$C_4$-alkyl, $C_1$-$C_4$-alkoxy, chlorine or sulfo,

n is 1 or 2, and wherein the ring

D is unsubstituted or substituted by sulfo, nitro, halogen or methyl,

with the proviso that A' cannot be the radical of 1-amino-2-hydroxynaphthalene-4-sulfonic acid when B' is the radical of 2-naphthol, and the ring D is substituted only by nitro in the p-position with respect to the oxygen atom.

7. A dye according to claim 6, which contains in all 2 nitro groups.

8. A process for obtaining a dye of the formula I, which process comprises producing the 1:1 chrome complex of the azo dye, and subsequently reacting this with the arylazo-azomethine dye, or preferably with a mixture of the corresponding amine and aldehyde.

9. Use of a dye of the formula I for dyeing wool and polyamide and in particular leather or furs.

**Revendications**

1. Colorants à complexe de chrome 1:2 de formule I

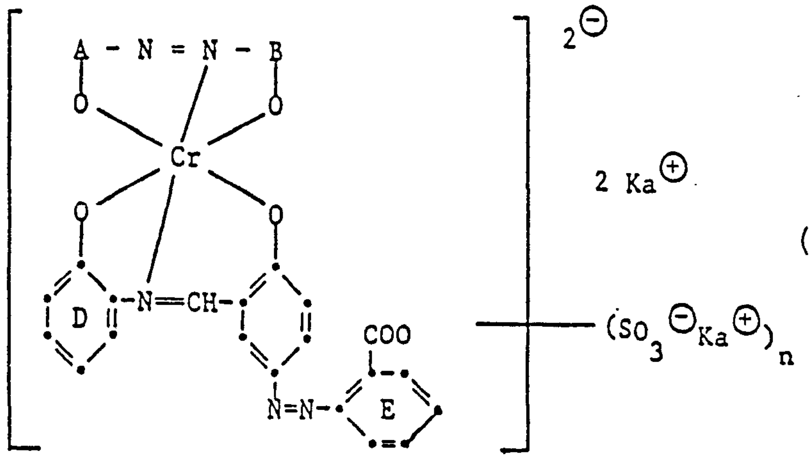

(I)

dans lesquels

A représente le reste d'un composant diazo de la série du benzène ou du naphthalène, portant le substituant hydroxy en position ortho par rapport au groupe azo,

B représente le reste d'un composant de copulation, portant le substituant hydroxy en position voisine par rapport au groupe azo,

n représente 1 ou 2 et

Ka+ représente un cation,

et dans lesquels les cycles D et E peuvent porter d'autres substituants, mais cependant pas de substituant nitro pour le cycle E, A ne devant pas représenter le reste de l'acide 1-amino-2-hydroxynaphthalène-4-sulfonique quand B est le reste du 2-naphthol, quand le cycle D n'est substitué qu'en position para par rapport à l'oxygène par un nitro et quand E n'est pas autrement substitué.

2. Colorants conformes à la revendication 1, dans lesquels A représente soit le reste d'un 1-hydroxy-2-aminobenzène, éventuellement substitué par un halogène, nitro, sulfo ou un alkyle ou alcoxy inférieur, soit le reste d'un 1-amino-2-hydroxy-4-sulfonaphthalène qui peut être éventuellement substitué en position 6 par un halogène, comme le brome et surtout le chlore, par un nitro ou un sulfo.

3. Colorants conformes aux revendications 1 ou 2, dans lesquels B représente soit un 1-naphthol ou un 2-naphthol, éventuellement substitué par un amino et/ou un sulfo, soit un p-(alkyle en $C_{1-6}$)-phénol, la 1-phényl-3-méthyl-5-pyrazolone ou l'acétylacétanilide et où le groupe phényle dans les duex derniers composés nommés peut être substitué par un alkyle en $C_{1-4,}$ un alcoxy en $C_{1-4,}$ un chlore ou un sulfo.

4. Colorants conformes à l'une quelconque des revendications 1-3 dans lesquels le cycle D est éventuellement substitué par un sulfo, nitro, halogène, méthyle ou méthoxy.

5. Colorants conformes à l'une quelconque des revendications 1-4, dans lesquels le cycle E n'est pas autrement substitué, ou l'est par un chlore, sulfo, méthyle ou un autre substituant carboxy.

6. Colorants conformes à la revendication 1, de formule II

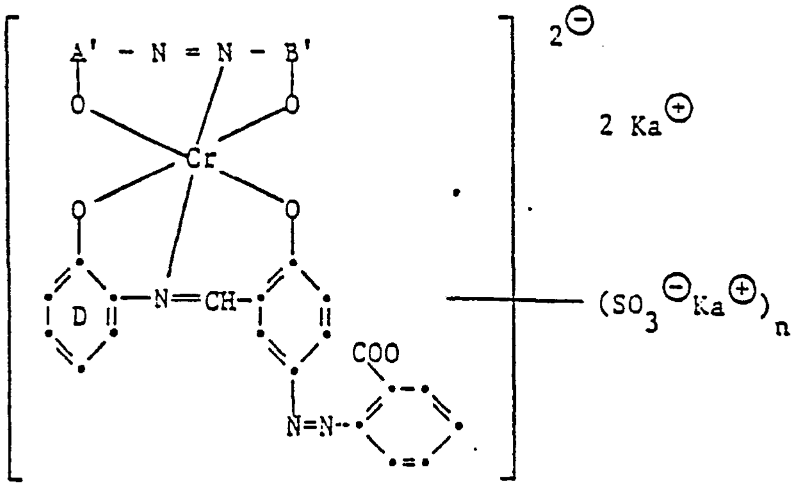

(II)

dans lesquels

A' est soit le reste d'un 1-hydroxy-2-aminobenzène, éventuellement substitué par un halogène, nitro, sulfo ou un alkylé ou alcoxy inférieur, soit le reste d'un 1-amino-2-hydroxy-4-sulfonaphthalène éventuellement substitué en position 6 par un chlore, un nitro ou sulfo,

B' est un 1- ou 2-naphthol, éventuellement substitué par un amino et/ou un sulfo, un p-(alkyle en $C_{1-6}$)-phénol, la 1-phényl-3-méthyl-5-pyrazolone ou l'acétylacétanilide et où le substituant phényle dans les deux derniers composés nommés peut être substitue par un alkyle en $C_{1-4,}$ un alcoxy en $C_{1-4,}$ un chlore ou un sulfo,

n signifie 1 ou 2, et dans lesquels le cycle

D peut être éventuellement substitué par un sulfo, nitro, halogène ou méthyle à condition qu'A' ne soit pas le reste de l'acide 1-amino-2-hydroxynaphtha-lène-4-sulfonique quand B' est le reste du 2-naphthol et quand le cycle n'est substitué qu'en position para par rapport à l'oxygène par un nitro.

7. Colorants conformes à la revendication 6, contenant en tout 2 groupes nitro.

8. Procédé de fabrication de colorants de formule I, caractérisé par le fait que l'on fabrique le complexe de chrome 1:1 du colorant azoïque et qu'on le fait réagir ensuite avec le colorant arylazo-azométhinique ou de préférence avec un mélange de l'amine et de l'aldéhyde correspondants.

9. Utilisation de colorants de formule I pour la teinture de la laine, du polyamide et particulièrement du cuir et des fourrures.